# EUROPEAN PATENT APPLICATION

(11) **EP 2 631 521 A1**
(43) Date of publication of application: **28.08.2013**
(21) Application number: 12156544.4
(22) Date of filing: 22.02.2012
(51) Int. Cl.: F16L 3/11, F16L 3/133, F16L 3/22, F16L 3/24, F16B 37/02

(54) **An element for suspending pipes**

(71) Applicant: Nelsén, Gun Jansson, 783 35 Säter (SE)
(72) Inventor: Nelsén Folke, deceased (SE)
(74) Representative: Olsson, Jan

(57) **Abstract**

An element for suspending pipes in ceilings is made of one single material piece having a thickness being substantially constant over the entire extension thereof. A first portion (3) of the element is configured to be applied against a ceiling and secured thereto from below in a state of use of the element, whereas a second portion (5) of the element is configured to extend downwardly from the ceiling in said state of use and hold a third portion (6) of the element at a distance below the ceiling. The third portion has in at least parts thereof surrounding at least one hole (10) therein a thickness being increased by at least 50% with respect to said thickness of the material piece. The hole (10) is provided with an internal thread for securing a bolt therein through a thread joint, in which the bolt is provided with a ring-shaped member for receiving a pipe brought therethrough.

## Description

### FIELD OF THE INVENTION AND BACKGROUND ART

The present invention relates to an element for suspending pipes in ceilings comprising a first portion configured to be applied against a ceiling and secured thereto from below in a state of use of said element, a second portion configured to extend downwardly from the ceiling in said state of use and hold a third portion of the element at a distance below the ceiling, said third portion having at least one hole so as to allow penetration of said third portion and securing thereto of an end of a bolt of the type having the other, opposite end thereof provided with a ring-shaped member configured to receive a pipe brought therethrough.

Such elements are used for suspending different types of pipes, especially water pipes, in the ceiling in buildings of different types, especially in basements and in industrial premises. Such an element has then normally a plurality of said holes for bringing so called rocker brackets for pipes therethrough and securing them therein. The pipes are then intended to extend in parallel with the ceiling and substantially perpendicularly to the longitudinal extension of the element, and a plurality of said elements of this type may be arranged at regular intervals in the direction of the extension of the pipes, in which the lengths of said intervals depend upon the thickness/weight of the pipes in question and may typically be 1-5 meters. The elements are usually manufactured by bending iron sheets or plates coated with zinc and are for that sake often called Z-ceiling irons. Such a ceiling iron is preferably manufactured by cutting suitable length from sheets bent, which may have a length of for example 2 meters. The length of the ceiling irons (the elements) is then made dependent upon how many pipes are to be held thereby.

In such elements already known, inter alia through BE 661 097 A, of this type after securing the element to a ceiling by screws or bolts a said bolt or often called rocker bracket rod, provided with a threaded end, has been pushed through a said hole of the third portion, whereupon securing has taken place by tightening nuts against the third portion from opposite directions for clamping the bolt and by that the rocker bracket in a determined position. This is a comparatively time consuming work, especially if a higher number of pipes are to be arranged side by side and a plurality of said elements are to be applied following upon each other along the extension of the pipes.

### SUMMARY OF THE INVENTION

The object of the present invention is to provide an element of the type defined in the introduction, which at least partially finds a remedy to the inconveniencies mentioned above of such elements already known.

This object is according to the invention obtained by providing an element of the type defined in the introduction, which additionally is characterized in that it is made of one single material piece having a substantially constant thickness over the entire extension thereof, that said third portion has in at least parts thereof surrounding said at least one hole a thickness being increased by at least 50% with respect to said thickness of said material piece, that said at least one hole is provided with an internal thread for securing a said bolt to said third portion by a thread joint, and that said at least one hole in said third portion is a result of an upsetting, so that said third portion except for parts thereof defining said at least one hole has the same thickness as said thickness of said material piece.

By the design of the third portion with such an increased thickness it has become possible to cut a thread through the third portion even if the rest of the material is too thin for this. Thus, for instance a sheet with a thickness of 2 mm may be used and by that for example a material thickness of 4 mm be obtained for the parts of the third portion surrounding said at least one hole in the case these have a thickness increase of 100% and a thread may thanks to this be cut in the sheet. This means that a said bolt/rocker bracket may be firmly attached to the third portion by screwing the end of the bolt through the hole in question. Considerable time may by this be saved when mounting the pipes.

The thickness necessary for providing a thread is by this obtained in a very advantageous way. It would result in considerably more costs to make the entire material piece with this thickness as a consequence of the additional material required, and this would also result in a considerably increased weight of the element. It is neither any alternative to have a thinner material piece for the first and second portions of the element and attach a thicker sheet thereto by welding for obtaining the possibility to cut a thread therein, since this would be far to costly.

By obtaining the thickness necessary for cutting a thread in the parts surrounding the hole by upsetting the thickness necessary for cutting a thread may be obtained with a material consumption of only the half of the material consumption that would result for an element having all three portions with a thickness being twice the thickness of said material piece.

According to an embodiment of the invention the element is made of one single material piece in the form of a metal plate bent for forming said portions. It is suitable to use a metal plate or metal sheet for forming a said element, and an iron sheet is advantageous from the cost point of view, which then is also advantageously coated with zinc for avoiding problems with corrosion.

According to another embodiment of the invention the element is made of a material piece with a thickness of 1,5 - 4 mm or 1,5 -2,5 mm. These are thicknesses suitable for the first and the second portion of the element and result at the same time in a double thickness of the third portion enabling thread cutting of a hole therethrough.

According to another embodiment of the invention said third portion and first portion extend in two planes being substantially parallel or parallel to each other. The second portion does then advantageously extend in a plane being substantially perpendicular or perpendicular to the planes of the first and third portion.

According to another embodiment of the invention said first and third portions extend in opposite directions from the second portion, which accordingly is the case for an element having substantially a Z-shape.

According to another embodiment of the invention the third portion has a plurality of said holes for suspension of a plurality of pipes side by side under a said ceiling.

Finally, the element has according to another embodiment of the invention a length of 100 - 4 000 mm, 500 - 3 000 mm or 1 500 - 2 500 mm. These are suitable lengths of such an element, in which the length is primarily depending upon how many pipes are to be suspended by the element.

Further advantages as well as advantageous features of the invention appear from the following description.

### BRIEF DESCRIPTION OF THE DRAWING

With reference to the appended drawing below follows a specific description of an embodiment of the invention cited as an example.

In the drawing:
- Fig. 1: is a simplified perspective view of a number of elements according to an embodiment of the invention in a state of use, and
- Fig. 2: is a sectioned view of an element according to an embodiment of the invention.

### DETAILED DESCRIPTION OF AN EMBODIMENT OF THE INVENTION

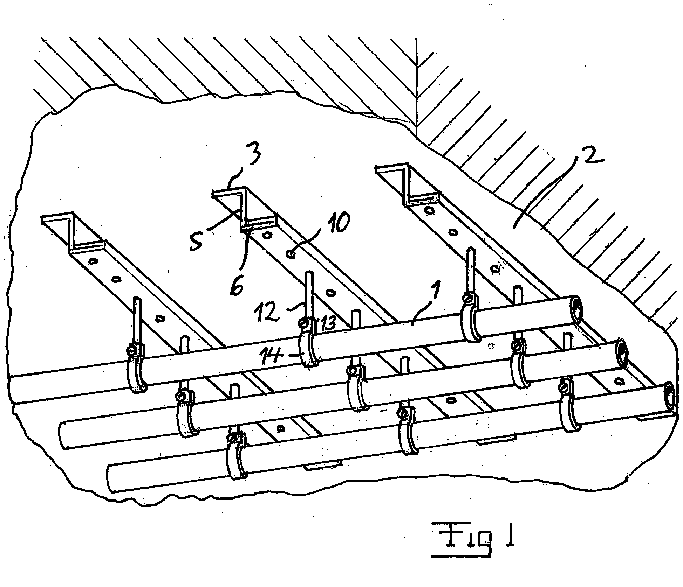

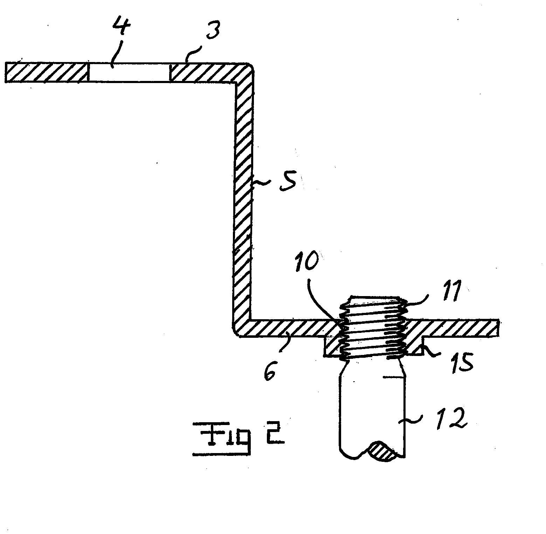

Fig. 1 shows how an element according to the invention may be used for suspending pipes 1, such as water pipes, in a ceiling 2 in a room. Such an element according to an embodiment of the invention will now be described while simultaneously making reference to fig. 2. The element is made of a metal sheet, in the present case of an iron sheet coated with zinc having a substantially constant thickness, in this case 2 mm. This iron sheet has been bent for obtaining an element shown in the figures. This element has a first portion 3 with a number of holes 4 so as to after applying this portion from below against a ceiling enable securing of the element through screws or bolts to the ceiling. The element has also a second portion 5 configured to extend downwardly from the ceiling in the state of use of the element and will by that in this state of use extend substantially perpendicularly to the first portion and by that normally vertically. The second portion is configured to hold a third portion 6 of the element at a distance below the ceiling. The third portion and the first portion do then extend in two planes being substantially parallel to each other. It is in fig. 1 in a simplified manner illustrated how the third portion 6 of the element has a greater thickness in at least parts thereof than the first and second portions. More exactly, this has been obtained by creating throughholes 10 in the third portion 6 by upsetting, so that such parts 15 surrounding such a hole have a thickness being at least 50%, and here 100%, greater than the thickness of the rest of the third portion and of the material piece from which the element is manufactured. A thread has then been cut in the parts 15 for securing one end 11 of a bolt 12 therein.

The third portion has a plurality of throughholes 10 following upon each other in the longitudinal direction of the element. These holes have for example a M8-thread, i.e. a thread designed to receive an outer thread of a bolt or the like with a diameter of 8 mm. An end 11 of a bolt 12 may by this be brought from below into a said hole 10 and be secured therein through a thread joint. It is for this sufficient that the bolt is screwed a couple of turns into the hole, so that the bolt may not fall out of the hole, and no additional fixation through any stop member or the like is necessary. The other end 13 of such a bolt is provided with a ring-shaped member 14, such as a so called rocker bracket, for receiving a pipe brought therethrough in the way illustrated in fig. 1.

It is easily understood that suspension of pipes in ceilings may be carried out very quickly by utilizing elements according to the invention. These elements are secured at regular intervals in the ceiling, as shown in fig. 1, whereupon bolts 12 may rapidly be screwed into the holes 10 at suitable locations and the pipes may then be pushed through the ring-shaped members 14.

The invention is of course not in any way restricted to the embodiment described above, but many possibilities to modifications thereof would be apparent to a person skilled in the art without departing from the scope of the invention as defined in the appended claims.

It is of course theoretically possible that the second portion of the element may extend while making another angle than 90° with respect to the first and/or third portion.

The distances between the holes in the third portion may be totally different than those indicated in fig. 1, and it is even possible that the element has only one such hole.

Even if a Z-like cross section shape of the element would often be preferred, other shapes may also exist. It would for example be possible that the third portion extends in substantially the same direction from the second portion as the first portion, so that the cross section shape gets C- or U-like.

"Sheet" and "plate" are in this disclosure to be interpreted broadly and also comprise that the element for instance is made of a metal ribbon wound onto rolls and having for example a length of 50 m and a with of 10 cm. Lengths of for example 2 m are then cut from the ribbon and bent so as to form a said element.

## Claims

1. An element for suspending pipes in ceilings comprising a first portion (3) configured to be applied against a ceiling and secured thereto from below in a state of use of said element, a second portion (5) configured to extend downwardly from the ceiling in said state of use and hold a third portion (6) of the element at a distance below the ceiling, said third portion having at least one hole (10) so as to allow penetration of said third portion and securing thereto of an end (11) of a bolt (12) of the type having the other, opposite end (13) thereof provided with a ring-shaped member (14) configured to receive a pipe brought therethrough, **characterized in that** the element is made from one single material piece having a substantially constant thickness over the entire extension thereof, that said third portion (6) has in at least parts thereof surrounding said at least one hole (10) a thickness being increased by at least 50% with respect to said thickness of said material piece, that said at least one hole is provided with an internal thread for securing a said bolt to said third portion by a thread joint, and that said at least one hole (10) in said third portion (6) is a result of an upsetting, so that said third portion except for parts (15) thereof defining said at least one hole has the same thickness as said thickness of said material piece.

2. An element according to claim 1, **characterized in that** it is made from one single material piece in the form of a metal plate bent so as to form said portions (3, 5, 6).

3. An element according to claim 1 or 2, **characterized in that** the element is made of one single material piece in the form of a metal sheet.

4. An element according to claim 3, **characterized in that** said metal sheet is an iron-sheet.

5. An element according to claim 3 or 4, **characterized in that** the metal sheet is coated with zinc.

6. An element according to any of the preceding claims, **characterized in that** it is made from a material piece having a thickness of 1,5 - 4 mm or 1,5 - 2,5 mm.

7. An element according to any of the preceding claims, **characterized in that** said third portion (6) and first portion (3) extend in two planes being substantially parallel or parallel to each other.

8. An element according to claim 7, **characterized in that** the second portion (5) extends in a plane being substantially perpendicular or perpendicular to the planes of the first (3) and third (6) portion.

9. An element according to any of the preceding claims, **characterized in that** said first (3) and third portion (6) extend in opposite directions from the second portion (5).

10. An element according to any of the preceding claims, **characterized in that** the third portion (6) has a plurality of said holes (10) for suspending a plurality of pipes side by side under a said ceiling.

11. An element according to any of the preceding claims, **characterized in that** it has a length of 100 - 4 000 mm, 500 - 3 000 mm or 1 500 - 2 500 mm.
